# EUROPEAN PATENT SPECIFICATION

(11) **EP 3 362 770 B1**
(45) Date of publication and mention of the grant of the patent: **18.09.2024**
(21) Application number: 16798554.8
(22) Date of filing: 06.10.2016
(51) Int. Cl.: G01M 1/02

(54) **WHEEL BALANCING MACHINE**
RADAUSWUCHTMASCHINE
MACHINE D'ÉQUILIBRAGE DE ROUE

(30) Priority: 13.10.2015 IT UB20154579; 18.03.2016 IT UB20161811
(43) Date of publication of application: 22.08.2018
(73) Proprietor: Boni, Fabio, 50032 Borgo San Lorenzo (FI) (IT)
(72) Inventor: Boni, Fabio, 50032 Borgo San Lorenzo (FI) (IT)
(74) Representative: Mannucci, Michele
(86) International application number: PCT/IB2016/055990
(87) International publication number: WO 2017/064599

(56) References cited:
- EP-A1- 2 116 835
- EP-A1- 2 650 147
- WO-A1-2014/184645
- IT-A1- IM2013 084 4A1
- US-A- 5 723 767

## Description

### TECHNICAL FIELD

The present invention relates to the field of wheel balancing devices, and more in particular to a wheel balancing machine, particularly but not exclusively for truck wheels, advantageously combinable with a "tire-removing" device.

### State of the art

There are known "tire-removing" devices which have the objective of removing the tire from the rim. These devices are usually found in tire centers.

There are also known tire-removing devices of transportable type, used to change tires in places not typically designated for changing tires, such as at the roadside, or in emergency situations. In this case, the tire-removing device is hinged to the bed of a van. With a tipping action, the device is extracted from the van and positioned close to the truck, from which the wheel with the tire to replace has been removed. The wheel is then mounted on the device and the tire is removed from the rim. It must be noted that this operation is not simple, also in view of the fact that the wheel with the tire can reach a weight of 200 kg.

An example of a tire-removing device is disclosed in WO2014184645 A1.

Besides removal (and refitting) of the tires, it is naturally also necessary to perform balancing of the wheel with the new tire. In emergency situations, a balancing machine is also present in the van.

In general, balancing machines are provided with a supporting base for a rotating shaft, on which there is arranged, on a specific flange, the wheel to be balanced. Force measuring sensors are associated with the shaft. The shaft is rotated at a predetermined speed and the forces generated at the rotation shaft due to imbalance of the wheel are measured. Starting from these measurements, correlated to an angular position signal of the wheel, indications on the imbalance, therefore on the value and on the angular positions of the counterweights to fix to the wheel, are obtained. An example of a balancing machine is disclosed in ITMI20130844 A1.

To overcome the problems of extracting the balancing machine from the van, and of the footprint thereof, for some years now tire-removing devices integrated with balancing machines have been developed.

For example, there is known a tire-removing/balancing machine having a tire-removing device of known type of the type hinged to a van, removably fixed to the top of which is a balancing machine of known type, without the base. The shaft with flange of the balancing machine extends from the opposite side with respect to the "tire-removing" side, so as to allow either removal or balancing operations to be carried out.

It must be removable due to the fact that this tire-removing/balancing machine, when configured for both operations, is laterally bulky (due to the balancing part) and this bulk does not allow tipping inside the van. In fact, the rims of the truck wheels for which the machine is to be used are very deep and the cantilevered part (shaft plus flange for fixing to the rim) must be long enough to be inserted inside. Therefore, after the tire-removing device has been tipped out of the van, the module of the balancing part must be removed from the van and fixed, using screws, to the top of the tire-removing device. In particular, the base of the part that comprises the support for the rotating shaft with the sensors is fixed, while the shaft with the flange projects cantilevered from this part. When the operations have terminated, the balancing module is detached and placed inside the van again, while the tire-removing device is tipped into the van.

This device has the drawback that the balancing module, although of smaller dimensions with respect to a conventional balancing machine (the voluminous base has been removed), is still too heavy to be easily moved by only one operator.

There is also known a balancing machine to be combined with a tire-removing device of conventional type, of limited dimensions. This balancing machine is provided with a plate to be fixed directly to the operating arms of the tire-removing device; on the plate there are present sensors, connected to the shaft, which measure the forces applied to the shaft by the imbalance.

This system has the advantage of being of limited weight, but has the drawback of occupying the operating area of the tire-removing device and therefore, after a wheel has been balanced, the balancing module must be removed each time before a new tire can be removed. This situation can occur frequently, if several tires of the same truck need to be replaced at once, with evident loss of time.

### Object and summary of the invention

The object of the present invention is to produce a balancing machine that has limited dimensions, but which can be used with truck wheels and is easy to transport and use.

Another important object of the present invention is to produce a balancing machine that can be integrated in tire-removing devices of known type.

Yet another important object of the present invention is to produce a tire-removing device equipped with removable fixing means for a balancing machine, which is flexible to use and easy to transport.

One more object of the present invention is to produce an integrated station for balancing and removing tires, which is of limited dimensions and easy to transport.

These and other objects, which will be more apparent below, are achieved with a wheel balancing machine, particularly but not exclusively for truck wheels, as set forth in the appended claims.

In particular, the object of the invention is a wheel balancing machine as disclosed by appended independent claim 1.

Preferably, the balancing module, when in use, is laterally spaced from the column.

Preferably, the first part of the supporting structure comprises
- a base for fixing to the column, preferably through reversible means, preferably threaded connections,
- a pair of first side members adapted to contain at least part of said second part.

Preferably, the second part of the supporting structure comprises a pair of second side members, between which there is defined a housing for the balancing module.

Preferably, the reversible locking means of the second part on said first part comprise
- a slot produced at the end of at least one said first side member of the first part of the supporting structure, adapted to accommodate a respective appendage projecting laterally from a corresponding second side member of the second part of the supporting structure, on said slot there being present a lower recess for housing said appendage; preferably there being present a first handle, connected to the axis of said appendage, and adapted to lock through friction when rotated toward said first side member in which said slot is present;
- a transverse rod arranged between said first side members under which there is adapted to be inserted the rear portion of said second part of structure, adapted to form an upper anti-tipping abutment for the assembly formed by the second part of supporting structure of said module;
- preferably there being present a stiffening element of the coupling of the second part in the first part, adapted to carry said rear portion of the second part to press against said rod; preferably said stiffening element being a threaded element arranged passing through a counter-threaded passage obtained on the base plate of said second part, the end of which contacts the base of said first part, so that by clamping said threaded element, said rear portion is raised toward said rod.

According to preferred embodiments, the balancing machine comprises means for fixing of said balancing module to the second part of the supporting structure, so that said module can be detached from said second part.

According to a second kind of preferred embodiments, the second part is slidingly associated with said first part, there being present means for moving said second part from a position of minimum footprint placed against said column, to a position cantilevered from said column corresponding to the operating position of said balancing module. Preferably, the balancing machine comprises means for reversible fixing of the balancing module to the second part of the supporting structure, so that the module can be detached from said structure to be transported separately.

According to the second kind preferred embodiments, the balancing machine comprises means for reversible fixing of said balancing module to the second part of the supporting structure, so that said module can be detached from said structure (M) to be transported separately.

According to the second kind preferred embodiments, said means for moving said second part comprise at least a guide for sliding said second part on said first part of the structure; preferably, said at least a guide having at least a rectilinear sliding stretch for a corresponding slider belonging to said second part of the supporting structure; preferably said rectilinear stretch ending with a recess lower with respect to the line for sliding of the slider on the same stretch, said recess being for stable positioning of said slider, corresponding to the cantilevered position of said second part (19); preferably said rectilinear stretch sloping upward in the direction from the position of minimum footprint to the cantilevered position.

According to the second kind preferred embodiments, said first part of said supporting structure comprises
- a base for fixing to said column, preferably through reversible means (24A, preferably threaded connections,
- a pair of first parallel side members on which respective said sliding guides are obtained.

According to the second kind preferred embodiments, said second part of said supporting structure comprises a pair of second parallel side members, connected crosswise by a pair of rods, whose ends act as sliders for respective sliding guides produced on said first side members of said first part of the supporting structure; between said side members there being defined a housing for said balancing module.

According to the second kind preferred embodiments, said reversible locking means of said second part on said first part are adapted to lock said second part in said cantilevered position.

According to another aspect, the invention also relates to a supporting structure for a balancing module to be fixed to the top of a column, preferably of a tire-removing device.

According to another aspect, the invention also relates to an integrated machine for removing tires and balancing wheels, particularly but not exclusively truck wheels, comprising a tire-removing device comprising an operating column, on a first operating side of which there are present operating arms for removing the tires, and a balancing machine as set forth in the appended claims.

According to another aspect, the invention also relates to a tire-removing device provided with a supporting structure designed to accommodate a balancing module.

### Brief description of the drawings

Further characteristics and advantages of the invention will become more apparent from the following description of a preferred but non-exclusive embodiment thereof, illustrated by way of non-limiting example in the accompanying drawings, wherein:
Fig. 1 represents an axonometric view of an integrated machine for removing tires and balancing wheels according to the invention, with the part related to the balancing machine in operating position;
Fig. 2 represents a lateral view of the integrated machine of Fig. 1, with the part related to the balancing machine during operation and with a truck wheel shown schematically;
Fig. 3 represents an axonometric view of the integrated machine of Fig. 1, with the part related to the supporting structure of the balancing module in a position of minimum footprint, without the balancing module, viewed from an opposite angle with respect to Fig. 1;
Fig. 4 represents the same axonometric view as Fig.3 with the part relating to the supporting structure of the balancing module in a position cantilevered with respect to the column of the tire-removing device;
Fig. 5 represents the same axonometric view as Fig. 4 also showing the balancing module;
Fig. 6 represents an axonometric view of an integrated machine for removing tires and balancing wheels according to the invention, according to a variant of the example of the previous figures, with the part relating to the balancing machine in operating position and without the electronic console for managing the machine;
Fig. 7 represents an axonometric view of the integrated machine of Fig. 6, with the part related to the second part of the supporting structure of the balancing module detached from the first part of the supporting structure, viewed from the same angle as Fig. 1;
Fig. 8 represents an axonometric view of the integrated machine of Fig. 6, with the part related to the balancing machine in operating position and with associated the electronic console for managing the machine, viewed from an opposite angle with respect to Fig. 6;
Fig. 9 represents a partially sectional lateral view only of the supporting structure of the balancing module, with the module fixed, in operating configuration.

### Detailed description of an embodiment of the invention

With reference to the aforesaid figures, an integrated machine for removing tires and balancing truck wheels according to the invention is indicated as a whole with the number 1000.

This machine 1000 comprises a tire-removing device 100 of known type, show schematically in the figures for the sake of clarity, comprising an operating column 101, on a first operating side 102 of which there are present operating arms 103, shown schematically, for removing tires. The device is of known type and will not be described in detail.

The machine 1000 also comprises a balancing machine 10 that comprises a balancing module M, substantially of known type, but of smaller dimensions with respect to modules that are already in use both alone and combined with tire-removing devices, for example similar to the device marketed by the same applicant of the present invention, described above, which required to be fixed directly to the top of columns of tire-removing devices.

This balancing module M comprises a base body 11 (such as a box-shaped body), a rotating shaft 12 with a first portion (not shown in the figures), rotatingly arranged inside the base body 11, and a second portion 14 outside the base body 11. On the second portion 14 of the shaft 12 there are present means 15 for fixing the wheel R, for example a fixing flange of known type.

In a known manner, inside the base body there are present electronic means (which comprise sensors adapted to measure the unbalance force at the shaft) associated with the shaft 12, schematized simply by the number 16, adapted to measure the imbalance of the wheel R fixed to the shaft, once again of known type.

According to the invention, the balancing machine 10 comprises a supporting structure 17 for the balancing module M. This structure 17 comprises a first part 18 for fixing to the top of the operating column 101 (naturally, the column supports the balancing machine) and a second part 19 for connection to the module M.

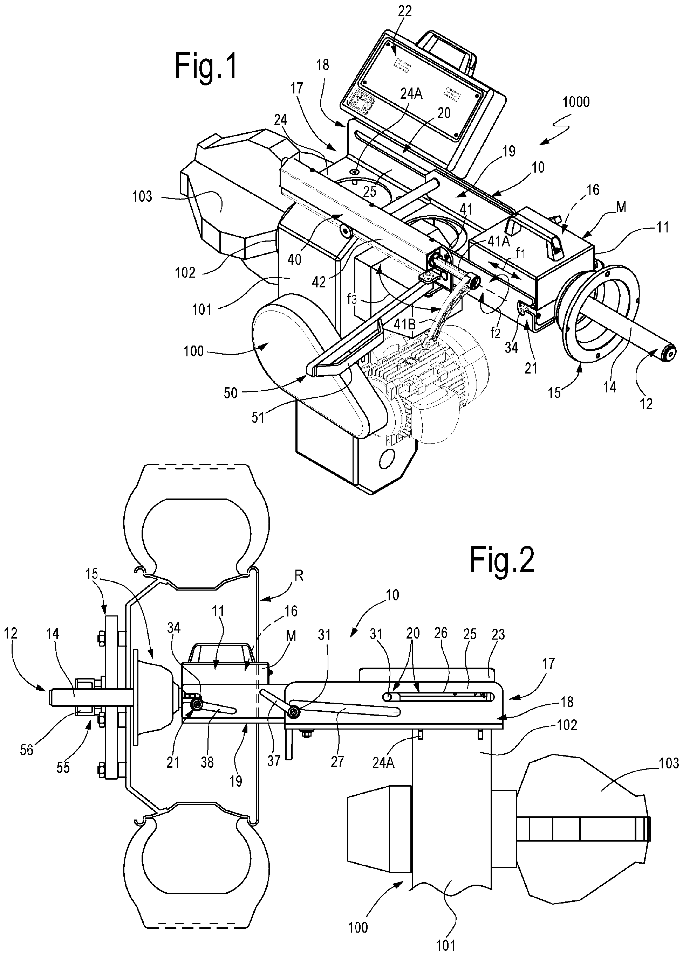

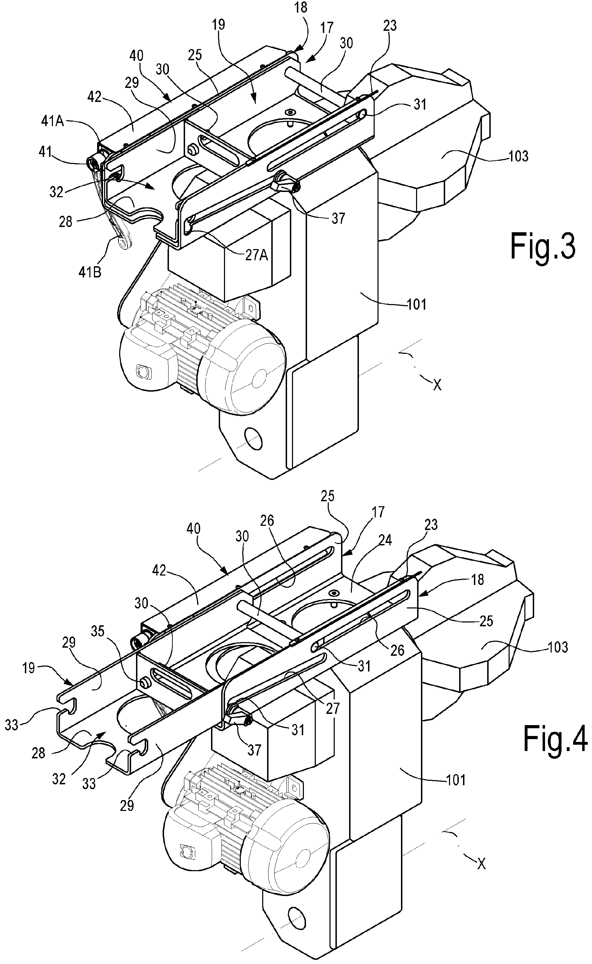

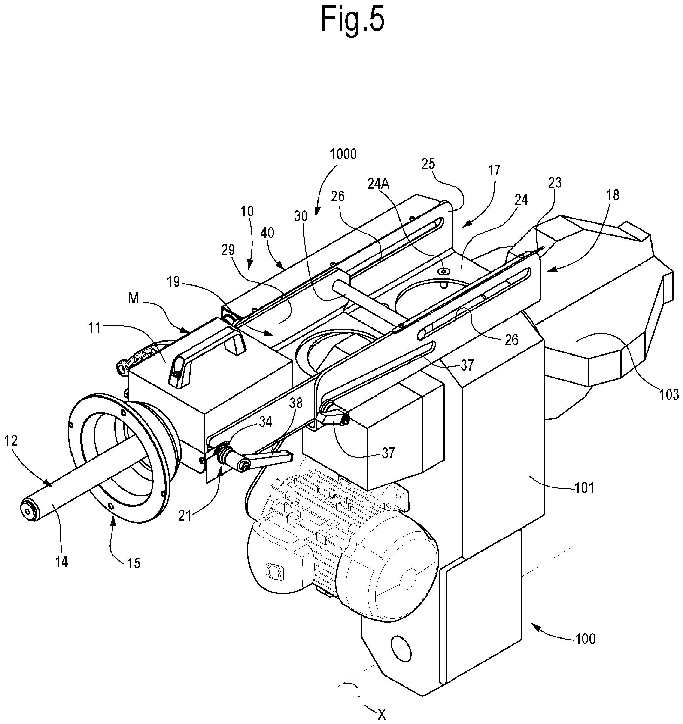

Advantageously, there are present means 20 for moving the second part 19 from a position of minimum footprint placed against the column 101 (Fig. 3), to a position cantilevered from the column, corresponding to the operating position of the balancing module M (Figs. 1, 2, 4 and 5). Advantageously, the balancing module, when in use, is laterally spaced from the column.

In practice, the supporting structure 17, when in use, comprises a portion cantilevered with respect to the column 101, so that the balancing module is arranged cantilevered.

Advantageously, there are present means 21 for reversible fixing of the balancing module M to the second part 19 of the supporting structure, so that the module M can be detached from the supporting structure 17 to be transported separately.

In practice, the operation and construction of the balancing module M are similar to those of other known balancing machines, but it is dimensioned so as to reduce the weights and dimensions to allow it to be easily transported, even by only one operator. The smaller dimensions do not allow direct fixing thereof to the column, as the shaft is long enough to allow fixing to the wheel of the truck (which is very deep) without this striking the column. Therefore, the supporting structure produced in a fixed part and a movable part allows the module to be positioned cantilevered with respect to the column, thereby increasing the distance from the column and allowing fixing of the wheel.

There is present an electronic console 22 (only shown in Fig. 1) for managing and controlling the balancing operations, operatively connected with the electronic means 16 in the balancing module M.

Advantageously, the electronic console 22 is separate from the base body 11 of the balancing module M, and is operatively connected to the electronic means 16 for measuring dynamic imbalance present in the base body, by means of wires (not shown in the figures) connectable by means of specific jacks (similarly, connections of wireless type could be present: WiFi, Bluetooth, and radio connections in general).

The electronic console 22 is, for example, in the form of a case. The console 22 can thus be transported separately from the balancing module M.

Advantageously, there is present a device 23 for supporting the console 22 on the supporting structure 17 when arranged on site to perform balancing. For example, the supporting device 23 is a supporting bracket with magnetic base for magnetically fixing the back of the console.

In this example, the first part 18 of the supporting structure 17 comprises a base 24 for fixing to the column 101 (to the top thereof), for example through reversible threaded connections 24A, such as four screws passing through the base and engaged on the top of the column 101.

From the base 24 there extend a pair of first parallel side members 25, on which respective sliding guides are obtained, forming part of the means 20 for moving the second part 19 between the position of minimum footprint and the operating position of the balancing module M.

In particular, on each side member there are present two separate sliding guides, formed respectively by a first rectilinear stretch 26, substantially horizontal when the machine is operating, and by a second stretch 27, sloping upward in the direction from the position of minimum footprint to the cantilevered position.

The second part 19 of the supporting structure 17 comprises a base plate 28 from which there extend a pair of second parallel side members 29. The two second side members 29 are connected crosswise by a pair of rods 30, whose ends 31 act as sliders for sliding on respective first and second rectilinear stretches 26 and 27 that, as stated, form the guides of the first part 18 of the supporting structure 17. In this way the second part 19 can slide on the first part 18.

Each second sloping rectilinear stretch 27 ends with a recess 27A, lower with respect to the sliding line of the respective slider 31 on the same stretch, which has the purpose of allowing stable positioning of this slider.

In the front end portion of the second part 19, between the second side members 29, there is defined a housing 32 for the balancing module M.

In particular, this housing, at the ends of the second side members 29, has a pair of lateral slots 33 for insertion of corresponding first lateral abutments 34 of the module M; moreover, on the rear part, the housing 32 has a pair of abutments 35 for the module M, adapted to oppose an upward movement of this module.

Advantageously, the means for moving 20 comprise reversible locking means of the second part 19 on the first part 18, at least when in the cantilevered position; for example, these means comprise a first handle/wing nut 37, connected to the axis of a slider 31, or to the respective rod 30, and therefore to the second part 19, adapted to clamp with pressure/lock with friction against a respective first side member of the first part 18. This first handle/wing nut 37 can act both in the first position of minimum footprint, and in the second cantilevered operating position.

Advantageously, there are present reversible fixing means 38 of the balancing module, which comprise for example a second handle/wing nut 38, connected to the base body 11 of the module M (for example at a first abutment 34), adapted to clamp with pressure/lock with friction against a respective second side member of the second part 19.

The balancing machine 10 also comprises a device 40 for measuring the axial position of predetermined points on the wheel to be balanced for entering the values measured in said electronic console 22 in order to calculate balancing parameters.

For example, the measuring device 40 comprises a measuring element 41, preferable extending mainly longitudinally, provided in a structure 42 for sliding thereof parallel to the axis of the rotating shaft 12 (arrow f1). This measuring element 41 comprises a rod-like part 41A sliding in the sliding structure 42.

There are associated with the measuring element 41 means for evaluating the axial distance of a measurement point thereof, for example its end toward the wheel, with a point fixed with respect to the sliding structure 42 (a point "0"), for example the part from which the rod-like part 41A of the measuring element projects. For example, these means for evaluating consist of a distance measurement scale, for example in millimeters, produced on the rod-like part 41A (for simplicity, the scale is not represented).

Advantageously, the measuring element 41 also comprises an end part 41B projecting cantilevered from the rod-like part 41A, rotating (arrow f2) about the axis of the rod-like part 41A, adapted to be placed in contact with the inside of the wheel in the reference area whose distance is to be measured.

Advantageously, in some embodiments (not represented here), the measuring device 40 can also comprise a part for measuring the radial distance from the axis of the shaft 12 of the predetermined points on the wheel to be balanced, which in practice corresponds to the diameter of the wheel in the points in which the balancing weights are to be positioned. The values measured are entered in the electronic console in order to calculate the balancing parameters. Advantageously, the radial distance is calculated based on the angular position (with respect to a reference point "0") of the end part 41B projecting with respect to the axis of the rod-like part 41A. Advantageously, there can be present sensors for detecting the position of this rod-like part with respect to the point fixed with respect to the sliding structure and for detecting the angular position of the end part projecting with respect to its axis of rotation, so that, in cooperation with electronic means for acquisition of the values measured by said sensors, these measured values can be loaded automatically into the electronic console.

Advantageously, the balancing machine comprises a braking device 50 of the rotating wheel. Preferably, this braking device 50 comprises a lever 51 articulated (rotating according to f3) to said supporting structure 17 and adapted to be brought into contact with a part thereof on the tire during balancing, which is rotating, to brake it through friction.

The balancing machine 10 also comprises means 55 for rotating the wheel. In this example these rotating means 55 comprising a handlebar 56 adapted to be fixed, on the opposite side of the balancing module M with respect to the wheel, on the shaft 12 (or on the means for fixing the wheel to the shaft, or alternatively directly to the wheel). It is understood that in other embodiments, rotating means of motorized type can be present.

Operation of the integrated machine 1000/balancing machine 10 is as follows.

The integrated machine for removing tires and balancing truck wheels 1000 is, for example, arranged inside a van, tipped about the articulation axis X.

In this step, the part relating to the balancing machine 10 is partly associated with the column 101 of the tire-removing device 100, and partly placed inside the van, detached from the device 100. In particular, the supporting structure 17 is fixed to the top of the column 101, with the second part 19 superimposed on the first part 18. The balancing module M and the electronic console 22 are detached from the assembly 100-17 now described.

The tire-removing device 100 is tipped out of the van, with the supporting structure 17 integrated, as shown in Fig. 3.

The locking means 37 are then released and the second part 19 is slid inside the rectilinear stretches 26 and 27 until reaching the cantilevered position shown in Figs. 1, 2, 4, 5. The cantilevered part is produced on the opposite side of the column with respect to the operating side for removing tires, so as not to interfere with this. The locking means 37 are then locked and the second part 19 is thus held stably in position.

At this point, the balancing module M is inserted into its housing 32, on the second part 19, in cantilevered position with respect to the column 101, and locked in the housing.

The wheel is arranged on the shaft 12 and locked to the flange 15. Advantageously, the wheel to be balanced can be loaded by means of the same movements carried out to load the wheel onto the tire-removing device, for example by sloping the column downward (about the axis X) and subsequently lifting it once the wheel has been inserted into and constrained on the balancing module M. The handlebar 56 for rotation of the tire is then fixed.

The electronic console 22 is arranged on the supporting structure 17 and connected to the balancing module, for example, by means of wires.

The measuring element is translated toward the rim, bringing the end part 41B into contact with the rim in the areas whose axial distance is to be measured (so as to define the axial dimensions of the rim, and also radial dimensions, if the value is not known or if it has not been measured in another way). From the millimetric scale, the corresponding values are read and entered in the console.

From here on, use of the balancing module M corresponds to that of a known balancing machine.

At the end of the operation, i.e. after all the wheels have been balanced, the steps described above are repeated in reverse order.

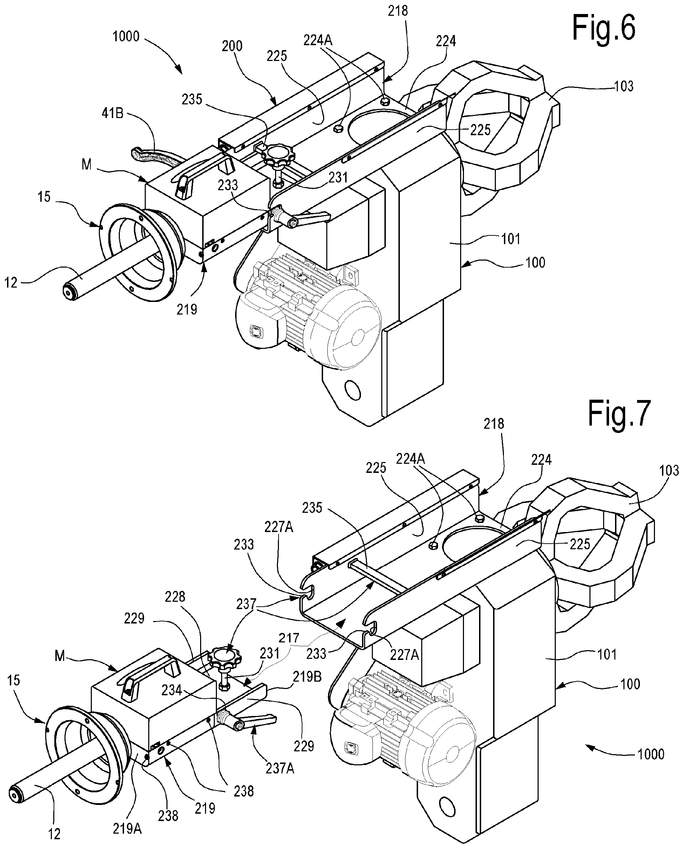

Figs. 6 to 9 show a variant of the balancing machine described above, which is now indicated as a whole with the number 200 instead of the number 10. It differs from the above substantially in the fact that the first part and the second part of the supporting structure, now indicated respectively with 218 and 219, are not slidingly associated with each other, but are separable, with the first part 218 fixed to the operating column 101, and the second part 219, detachable from and attachable to the first part 218, supporting the balancing module M, arranged cantilevered with respect to the column 101, according to requirements, as better described hereunder.

In this example, the tire-removing device is substantially the same as the preceding example, and therefore will have the same number 100 in the figures. Likewise, also the part of the balancing machine relating to the measuring device of the axial position of the points of the wheel is the same as the preceding example, as are the means for rotating the wheel, the braking device thereof, as well as the balancing module and the electronic console and its method of fixing to the supporting structure; as all these parts remain the same, for simplicity they will keep the same numbers as before.

In this example, the first part 218 of the supporting structure 217 comprises a base 224 for fixing to the column 101 (to the top thereof), for example by means of reversible threaded connections 224A, such as four screws passing through the base and in engaged on the top of the column 101.

From the base 224 there extend a pair of first parallel side members 225, adapted to contain the rear part of the second part 219.

At the ends of the first side members 225, there are present respective slots 233, the lower parts of which have respective recesses 227A, adapted to accommodate respective appendages 234 of the second part 219, as explained below.

The second part 219 of the supporting structure 217 comprises a base plate 228 from which there extend a pair of second parallel side members 229. This second part has a front portion 219A for housing the balancing module M, and a rear portion 219B, for coupling to the first part 218. From the second side members 229 there extend laterally the aforesaid appendages 234.

There are present means 238 for fixing the balancing module M to the second part 219, so that the module M can be detached from the second part 219, for example in the case of having to perform maintenance on the module, or in the case of maintenance on the second part 219. For example, these fixing means 238 consist of threaded elements engaging on the module and arranged passing through the second side members 229.

There are present reversible locking means 237 of the second part 219 on the first part. These locking means 237 comprise the slots 233, a transverse rod 235 arranged between the first side members 225, adapted to be inserted under which is the rear portion 219B of the second part 219 of structure 217, adapted to form an upper anti-tipping abutment for the assembly formed by the second part 219 supporting the module M. More in general, instead of the transverse rod there can be used any abutment that produces an undercut portion for the rear portion 219B of the second part 219.

Further, the locking means 237 comprise a stiffening element 231 of the coupling of the second part 219 in the first part 218, adapted to bring the rear portion 219B of the second part to press against the transverse rod 235.

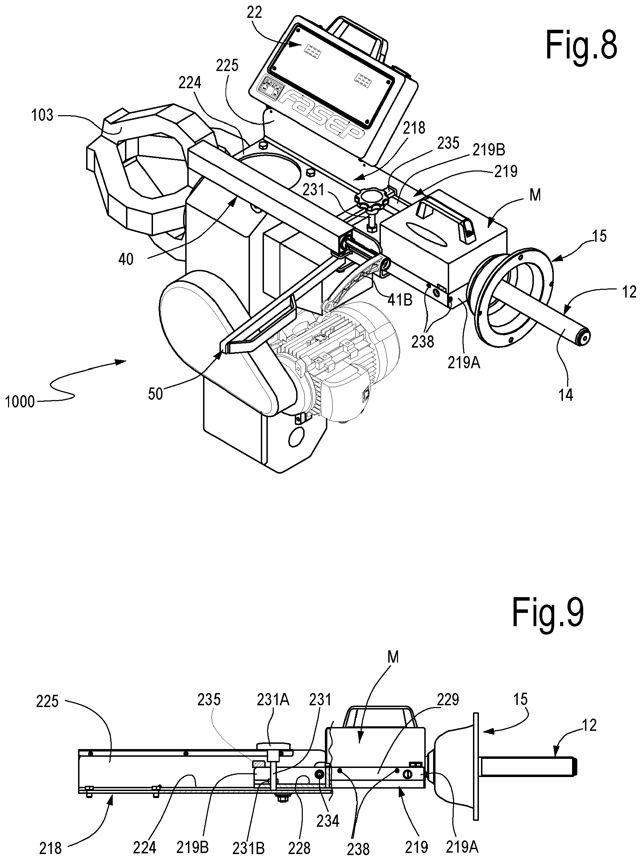

In this example, this stiffening element 231 comprises a threaded element with knob 231A, arranged passing through a counter-threaded passage 231B obtained on the base plate 228 (clearly visible in Fig. 9); the free end of this threaded element 231 is positioned downward and is adapted to contact the base 224 of the first part 218, so that, by clamping the threaded element 231 downward, the rear portion is pushed upward, i.e. pushes against the transverse rod 235.

Further, in this example, locking means 237 comprise a handle 237A, connected to the axis of the appendage 234, and therefore to the second part 219, adapted to clamp with pressure/lock with friction against a respective first side member of the first part 218.

Operation of this second version of balancing machine is as follows. The first part 218 of supporting structure 217 is stably fixed to the column 101 (they are detached only for maintenance purposes or similar). The module M is stably fixed in the front portion of the second part 219 of the supporting structure (they are detached only for maintenance purposes or similar). Before starting to perform the balancing operation, the first and second part of the structure 217 are separated.

As explained above, the column is tipped into the operating position. At this point, the operator takes the assembly formed by the second part 219 with the balancing module M, positions the rear portion 219B of the second part 219 under the transverse rod 235 and inserts the appendage 234 into the recesses 227A of the slots 233. The module M is heavy and therefore the second part 219 / module M assembly tends to rotate forward, with said appendages 234 acting as pivot on the recesses 227A. The transverse rod 235 prevents rotation, opposing the rotation of the rear portion 219B. This coupling between first and second part can be stiffened by acting on the knob 231A, screwing the threaded element 231 downward. As its end is in contact with the base of the first part it cannot move downward and consequently the second part 219 tends to move upward (due to the thread of the passage 231B through the base plate thereof).

Moreover, it is possible to clamp the handle 237, which clamps with pressure/locks with friction against the respective first side member of the first part 218, further locking the first and second part to each other.

In practice, the supporting structure 217, when in use, comprises a portion cantilevered with respect to the column 101, so that the balancing module is arranged cantilevered. The balancing module, when in use, is laterally spaced from the column.

Operation of the other components of the machine is the same as described in the previous example.

It is understood that the drawing only shows possible non-limiting embodiments of the invention, which can vary in forms and arrangements without however departing from the scope of the concept on which the invention is based. Any reference numerals in the appended claims are provided purely to facilitate the reading thereof, in the light of the above description and accompanying drawings, and do not in any way limit the scope of protection.

## Claims

1. Wheel balancing machine, particularly but not exclusively for truck wheels, comprising a balancing module (M) that in turn comprises a base body (11), a rotating shaft (12) with a first portion rotatingly arranged inside the base body (11) and a second portion (14) outside said base body (11), on said second portion of shaft (12) there being present means (15) for fixing the wheel (R), in said base body (11) there being present electronic means (16) associated with said shaft (12), adapted to measure the imbalance of said wheel (R) fixed to said shaft (12), there being present an electronic console (22) for managing and controlling the balancing operations operatively connected with said electronic means (16), further comprising an operating column (101) to which a supporting structure (17, 217) for supporting said balancing module (M) is fixed, said supporting structure (17, 217) comprising a first part (18, 218) for fixing the supporting structure (17, 217) to said operating column (101), and a second part (19, 219) for connection to said module (M), so that, during operation, said balancing module (M) is fixed cantilevered to said operating column (101), i.e. said balancing module (M) is arranged cantilevered, when in use, with respect to said operating column (101); said supporting structure (17, 217) comprising reversible locking means (37, 237) of said second part (19, 219) on said first part (18, 218) in said cantilevered position, said reversible locking means (37, 237) being such that the assembly formed by said module (M) and said second part (219) is adapted to be detached from said structure to provide a separated transportation when the machine is not operating; **characterized in that** said first part (18, 218) is fixed to said operating column (101), such that during said transportation said first part (18, 218) is fixed to said column (101) and the assembly formed by said module (M) with said second part (19, 219) is separated from said first part (18, 218).

2. Balancing machine according to claim 1, wherein said balancing module (M), when in use, is laterally spaced from said operating column (101).

3. Balancing machine according to claim 1, wherein said first part (218) of said supporting structure (217) comprises
- a base (224) for fixing to said operating column (101), preferably through reversible means (224A), preferably threaded connections,
- a pair of first parallel side members (225) adapted to contain at least part of said second part (219).

4. Balancing machine according to claim 1 or 3, wherein said second part (219) of said supporting structure (217) comprises a pair of second parallel side members (229), between said second side members there being defined a housing (219A) for said balancing module.

5. Balancing machine according to any of claims 1, 3 or 4, wherein said reversible locking means (237) of said second part (219) on said first part (218) comprise
- a slot (233) produced at the end of at least one said first side member (225) of the first part (218) of the supporting structure, adapted to accommodate a respective appendage (234) projecting laterally from a corresponding second side member (229) of the second part (219) of the supporting structure, on said slot (233) there being present a lower recess for housing said appendage (234); preferably there being present a first handle (237A), connected to the axis of said appendage (234), and adapted to lock through friction when rotated toward said first side member (225) in which said slot (233) is present;
- a transverse rod (235) arranged between said first side members (225), adapted to be inserted under which is the rear portion of said second part (219) of structure, adapted to form an upper anti-tipping abutment for the assembly formed by the second part (219) of the supporting structure of said module (M);
- preferably there being present a stiffening element (231) of the coupling of the second part (219) in the first part (218), adapted to bring said rear portion (219B) of the second part (219) to press against said rod; preferably said stiffening element (231) being a threaded element arranged passing through a counter-threaded passage obtained on the base plate (228) of said second part (219), the end of which contacts the base of said first part (218), so that by clamping said threaded element, said rear portion is raised toward said rod.

6. Balancing machine according to one or more of the preceding claims, comprising means (21) for fixing of said balancing module (M) to said second part (19, 219) of the supporting structure (17, 217), so that said module (M) can be detached from said second part (19, 219).

7. Balancing machine according to one or more of the preceding claims, wherein said electronic console (22) is separate from said base body (11) of said balancing module (M) and operatively connected to said electronic means (16) for measuring dynamic imbalance present in said base body (11), by means of wires or by wireless connection; preferably there being present a device (23) for supporting said console (22) on said supporting structure (17) when arranged on site to perform balancing; preferably said electronic console (22) being transportable separately from said balancing module (M).

8. Balancing machine according to one or more of the preceding claims, comprising a device (40) for measuring the axial position of predetermined points on the wheel (R) to be balanced for entering the values measured in said electronic console (22) in order to calculate balancing parameters.

9. Balancing machine according to claim 8, wherein said measuring device (40) comprises a measuring element (41), preferably extending mainly longitudinally, provided in a structure (42) for sliding thereof parallel to the axis of said shaft; there being associated with said measuring element (41) means for evaluating the axial distance of a measurement point thereof with a point fixed with respect to said sliding structure (42); preferably said measuring element (41) comprising a rod-like part (41A) sliding in said sliding structure (42); preferably said rod-like part (41A) having a distance measurement scale.

10. Balancing machine according to claim 9, wherein said measuring element (41) also comprises an end part (41B) projecting cantilevered from said rod-like part (41A), rotating about the axis of said rod-like part (41A), adapted to be placed in contact with the inside of the wheel in the reference area whose distance is to be measured; preferably, said measuring device (40) also comprises a part for measuring the radial distance from the axis of said shaft of said predetermined points on the wheel to be balanced to enter the values measured in said electronic console in order to calculate the balancing parameters; said measurement being calculated based on the angular position of said end part projecting with respect to the axis of said rod-like part; preferably said measuring device comprises sensors for detecting the position of said rod-like part with respect to said point fixed with respect to said sliding structure and for detecting the angular position of said end part projecting with respect to its axis of rotation, there being present electronic means for acquisition of the position values measured by said sensors.

11. Balancing machine according to one or more of the preceding claims, comprising a braking device (50) of the rotating wheel (R); preferably said braking device (50) comprising a lever (51) articulated to said supporting structure (17) and adapted to be brought into contact with a part thereof on the tire during balancing.

12. Balancing machine according to one or more of the preceding claims, comprising means (55) for rotating the wheel, of manual or motorized type; preferably said means for rotating the wheel being of manual type and comprising a handlebar (56) adapted to be fixed on the opposite part of said balancing module (M) with respect to the wheel on said shaft (12) or on said means for fixing said wheel to the shaft or on said wheel.

13. Integrated machine (1000) for removing tires and balancing wheels, particularly but not exclusively truck wheels, comprising:
- a tire-removing device (100) comprising an operating column (101), on a first operating side of which there are present operating arms (103) for removing tires,
- a balancing machine (10) according to one or more of the preceding claims, fixed on said operating column (101), adapted to support said supporting structure (17).

14. Integrated machine (1000) according to claim 13, wherein said supporting structure of said balancing machine is fixed at the top of said operating column; preferably said second part of said structure being arranged cantilevered from a second operating side of said operating column, opposite said first side.

15. Integrated machine (1000) according to claim 13 or 14, arranged inside a van, wherein said operating column (101) has an articulation axis (X) and said integrated machine can be tipped about said articulation axis (X), and the part relating to said balancing machine (10) is partly associated with said column (101) of the tire-removing device (100), and partly placed in-side the van, detached from said device (100); said balancing module (M) being detached from the assembly 100-17.

## Patentansprüche

1. Rad-Auswuchtmaschine insbesondere aber nicht exklusiv für Lkw-Räder, mit einem Auswuchtmodul (M), das der Reihe nach einen Basiskörper (11), eine Drehwelle (12) mit einem ersten Teil aufweist, der drehbar innerhalb des Basiskörpers (11) angeordnet ist, und einem zweiten Teil (14) außerhalb des Basiskörpers (11) wobei auf den zweiten Teil der Welle (12) Mittel (15) vorgesehen sind, um das Rad (R) in dem Basiskörper zu fixieren, wobei elektronische Mittel (16), die der Welle (zugeordnet sind, ausgebildet sind, um die Unwucht des Rades (R) , das auf der Welle (12) fixiert ist, zu messen, wobei eine elektronische Konsole (22) vorhanden ist, um die Auswuchtvorgänge zu verwalten und zu regeln, die operativ mit den elektronischen Mitteln (16) verbunden ist, mit ferner einer Betriebssäule (101), an der eine Trägerstruktur (17, 217) zum Tragen des Auswuchtmoduls (M) befestigt ist, wobei die Trägerstruktur (17, 217) einen ersten Teil (18, 218) zum Fixieren der Trägerstruktur (17, 217) an der Betriebssäule (101) aufweist und einen zweiten Teil (19, 219) zur Verbindung mit dem Modul (M), sodass während des Betriebs das Auswuchtmodul (M) freitragend mit der Betriebssäule (101) fixiert ist, sodass das Auswuchtmodul (M) in Gebrauch mit Bezug auf die Betriebssäule (101) freitragend ist, wobei die Trägerstruktur (17, 217) eine reversible Sperreinrichtung (37, 237) des zweiten Teils (19, 219) auf dem ersten Teil (18, 218) in der freitragenden Position aufweist, wobei die reversible Sperreinrichtung (37, 237) derart ist, dass die Anordnung, die durch das Modul (M) und den zweiten Teil (219) gebildet wird, dazu ausgebildet ist, um von der Struktur getrennt zu werden, um einen getrennten Transport zu schaffen, wenn die Maschine nicht in Betrieb ist, **dadurch gekennzeichnet, dass** der erste Teil (18, 218) an der Betriebssäule (101) befestigt ist, sodass während des Transports der erste Teil (18, 218) an der Säule (101) befestigt ist und die Anordnung, die durch das Modul (M) mit dem zweiten Teil (19, 219) gebildet ist, von dem ersten Teil (18, 218) getrennt ist.

2. Auswuchtmaschine nach Anspruch 1, wobei das Auswuchtmodul (M) im Gebrauch seitlich von der Betriebssäule (101) beabstandet ist.

3. Auswuchtmaschine nach Anspruch 1, wobei der erste Teil (218) der Trägerstruktur (217) aufweist
- eine Basis zur Fixierung an der Betriebssäule (101), vorzugsweise durch reversible Mittel (224A), vorzugsweise durch Gewindeverbindungen,
- ein Paar von ersten parallelen Seitenelementen (225), die ausgebildet sind, um zumindest einen Teil des zweiten Teils (290) aufzunehmen.

4. Auswuchtmaschine nach Anspruch 1 oder 3, wobei der zweite Teil (219) der Trägerstruktur (217) ein Paar von zweiten parallelen Seitenelementen (229) aufweist, wobei zwischen den zweiten Seitenelementen ein Gehäuse für das Auswuchtmodul definiert ist.

5. Auswuchtmaschine nach einem der Ansprüche 1, 3 oder 4, wobei die reversible Sperreinrichtung (237) des zweiten Teils (219) auf dem ersten Teil (218) aufweist
- einen Schlitz (233), die er an dem Ende von mindestens einem des ersten Seitenelements (225) des ersten Teils (218) der Trägerstruktur ausgebildet ist, der ausgebildet ist, um einen jeweiligen Ansatz (234), der seitlich von einem entsprechenden zweiten Seitenelement (229) des zweiten Teils (219) der Trägerstruktur aufzunehmen, wobei auf dem Schlitz (233) eine untere Ausnehmung zur Aufnahme des Ansatzes (234) vorgesehen ist, wobei vorzugsweise ein erster Handgriff (237A) vorhanden ist, der mit der Achse des Ansatzes (234) verbunden ist und ausgebildet ist, um durch Reibung zu sperren, wenn er zu dem ersten Seitenelement (225) gedreht wird, in dem der Schlitz (233) vorhanden ist,
- einen Querstab (235), der zwischen den ersten Seitenelementen (225) angeordnet ist, der ausgebildet ist, unter das, was der hintere Teil des zweiten Teils (219) der Struktur ist, eingefügt zu werden, der ausgebildet ist, um einen oberen Kippschutz-Anschlag für die Anordnung zu bilden, die durch den zweiten Teil (219) der Trägerstruktur des Moduls (M) gebildet ist,
- wobei vorzugsweise ein Versteifungselement (231) der Kopplung des zweiten Teils (219) in dem ersten Teil (218) vorgesehen ist, das ausgebildet ist, um den hinteren Teil (219B) des zweiten Teils (219) dazu zu bringen, gegen den Stab zu pressen, wobei vorzugsweise das Versteifungselement (231) ein Gewindeelement ist, das ausgebildet ist, um durch einen Durchgang mit Gegengewindes zu passieren, der auf der Basisplatte (228) des zweiten Teils (219) erhalten wird, dessen Ende die Basis des ersten Teils (218) kontaktiert, sodass durch Klemmen des Gewindeelements der hintere Teil zu dem Stab angehoben wird.

6. Auswuchtmaschine nach einem oder mehreren der vorstehenden Ansprüche mit Mitteln (21) zum Fixieren des Auswuchtmoduls (M) an dem zweiten Teil (19, 219) der Trägerstruktur, sodass das Modul (M) von dem zweiten Teil (19, 219) getrennt werden kann.

7. Auswuchtmaschine nach einem oder mehreren der vorstehenden Ansprüche, wobei die elektronische Konsole (22) von dem Basiskörper (11) des Auswuchtmoduls (M) getrennt ist und betriebsmäßig mit der elektronischen Einrichtung (16) zum Messen einer dynamischen Unwucht verbunden ist, die in dem Basiskörper (11) vorhanden ist, und zwar mittels Drähten oder durch eine drahtlose Verbindung, wobei vorzugsweise eine Vorrichtung (23) zum Tragen der Konsole (22) auf der Trägerstruktur (17) vorhanden ist, wenn sie am Ort angeordnet ist, um ein Auswuchten durchzuführen, wobei vorzugsweise die elektronische Konsole (22) separat von dem Auswuchtmodul (M) getrennt transportierbar ist.

8. Auswuchtmaschine nach einem oder mehreren der vorstehenden Ansprüche mit einer Vorrichtung (40) zum Messen der Axialposition von vorgesehenen Punkten auf dem Rad (R), das auszuwuchten ist, um die in der elektronischen Konsole (22) gemessenen Werte einzugeben, um Auswucht-Parameter zu berechnen.

9. Auswuchtmaschine nach Anspruch 8, wobei die Messvorrichtung (40) ein Messelement (41) aufweist, das sich vorzugsweise hauptsächlich längs erstreckt, das in einer Struktur (42) seiner Verschiebung parallel zu der Achse der Welle vorgesehen ist, wobei mit dem Messelement (41) Mittel vorgesehen sind, um die axiale Distanz eines Messpunktes mit einem Punkt zu evaluieren, und zwar Bezug auf die Verschiebungsstruktur (42), wobei vorzugsweise das Messeelement (41) einen stabähnlichen Teil (41A) aufweist, der eine Abstands-Messskala aufweist.

10. Auswuchtmaschine nach Anspruch 9, wobei das Messelement (41) ferner einen Endteil (41B) aufweist, der freitragend von dem stabähnlichen Teil (41A) vorsteht, der sich um die Achse des stabähnlichen Teils (41A) dreht, der ausgebildet ist, um in Kontakt mit dem Inneren des Rades in dem Bezugsbereich zukommen, dessen Abstand zu messen ist, wobei vorzugsweise die Messvorrichtung (40) auch einen Teil zum Messen des radialen Abstands von der Achse der Welle an den vorgegebenen Punkten des Rades, das auszuwuchten ist, aufweist, um die in der elektronischen Konsole gemessenen Werte einzugeben, um die Auswuchtparameter der zu berechnen, wobei die Messung basierend auf der Winkelposition des Endteils berechnet wird, das mit Bezug auf die Achse des stabähnlichen Teils vorsteht, wobei die Messvorrichtung Sensoren zur Erfassung der Position des stabförmigen Teils mit Bezug auf den Punkt aufweist, der mit Bezug auf die Verschiebungsstruktur fixiert ist, und zur Erfassung der Winkelposition des Endteils, der mit Bezug auf die Drehachse vorsteht, wobei elektronische Mittel zur Aufnahme der Positionswerte vorhanden sind, die durch die Sensoren gemessen wurden.

11. Auswuchtmaschine nach einem oder mehreren der vorstehenden Ansprüche mit einer Bremsvorrichtung (50) des drehenden Rades (R), wobei vorzugsweise die Bremsvorrichtung (50) einen Hebel (51) aufweist, der an der Trägerstruktur (17) angelenkt ist und ausgebildet ist, um in Kontakt mit einem Teil davon auf dem Reifen während des Auswuchtens zukommen.

12. Auswuchtmaschine nach einem oder mehreren der vorstehenden Ansprüche mit einer Einrichtung (55) zum Drehen des Rades vom manuellen oder angetriebenen Typ, wobei vorzugsweise die Einrichtung zum Drehen des Rades vom manuellen Typ ist und einen Handgriff (56) aufweist, der ausgebildet ist, um an dem gegenüberliegenden Teil des Auswuchtmoduls (M) mit Bezug auf das Rad auf der Welle (12) oder auf der Einrichtung zum Fixieren des Rades auf der Welle oder des Rades fixiert zu werden.

13. Integrierte Maschine (1000) zum Entfernen von Reifen und zum Auswuchten von Rädern, insbesondere, aber nicht ausschließlich von Lkw-Rädern, mit:
- einer Reifen-Entfernungsvorrichtung (100) mit einer Betriebssäule (101) an einer ersten Betriebsseite davon, an der Betriebsarme (103) zur Entfernung von Reifen vorhanden sind,
- einer Auswuchtmaschine (10) nach einem oder mehreren der vorstehenden Ansprüche, die an der Betriebssäule (101) befestigt ist, die ausgebildet ist, um die Trägerstruktur (17) zu tragen.

14. Integrierte Maschine (1000) nach Anspruch 13, wobei die Trägerstruktur der Auswuchtmaschine am oberen Ende der Betriebssäule befestigt ist, wobei vorzugsweise der zweite Teil der Struktur freitragend von der zweiten Betriebsseite der Betriebssäule gegenüber der ersten Seite angeordnet ist.

15. Integrierte Maschine (1000) nach Anspruch 13 oder 14, die in einem Lastwagen angeordnet ist, wobei die Betriebssäule (101) eine Gelenksachse (X) aufweist und die integrierte Maschine um die Gelenksachse (X) gekippt werden kann und wobei der Teil, der sich auf die Auswuchtmaschine (10) bezieht, teilweise der Säule (101) der Reifen-Entfernungsvorrichtung (100) zugeordnet ist und teilweise innerhalb des Lastwagens getrennt von der Vorrichtung (100) platziert ist, wobei das Auswuchtmodul (M) von der Anordnung 100-17 getrennt ist.

## Revendications

1. Machine d'équilibrage de roue, en particulier mais non exclusivement pour des roues de camion, comprenant un module d'équilibrage (M) qui comprend à son tour un corps de base (11), un arbre tournant (12) avec une première partie agencée rotative à l'intérieur du corps de base (11) et une deuxième partie (14) à l'extérieur dudit corps de base (11), des moyens (15) pour fixer la roue (R) étant présents sur ladite deuxième partie de l'arbre (12), des moyens électroniques (16) étant présents dans ledit corps de base (11), associés audit arbre (12) et aptes à mesurer le déséquilibre de ladite roue (R) fixée audit arbre (12), une console électronique (22) pour gérer et commander les opérations d'équilibrage étant présente et fonctionnellement connectée auxdits moyens électroniques (16), comprenant en outre un colonne fonctionnelle (101) à laquelle est fixée une structure de support (17, 217) pour supporter ledit module d'équilibrage (M), ladite structure de support (17, 217) comprenant une première partie (18, 218) pour fixer la structure de support (17, 217) à ladite colonne fonctionnelle (101), et une deuxième partie (19, 219) pour une connexion audit module (M), de sorte que, durant le fonctionnement, ledit module d'équilibrage (M) soit fixé en porte-à-faux à ladite colonne fonctionnelle (101), c'est-à-dire que ledit module d'équilibrage (M) soit agencé en porte-à-faux, lors de l'utilisation, par rapport à ladite colonne fonctionnelle (101) ; ladite structure de support (17, 217) comprenant des moyens de verrouillage réversibles (37, 237) de ladite deuxième partie (19, 219) sur ladite première partie (18, 218) dans ladite position en porte-à-faux, lesdites moyens de verrouillage réversibles (37, 237) étant tels que l'assemblage formé par ledit module (M) et ladite deuxième partie (219) soit apte à être détaché de ladite structure pour fournir un transport séparé, lorsque la machine n'est pas en fonctionnement ; **caractérisé en ce que** ladite première partie (18, 218) est fixée à ladite colonne fonctionnelle (101) de telle sorte que durant ledit transport ladite première partie (18, 218) soit fixée à ladite colonne (101) et que l'assemblage formé par ledit module (M) avec ladite deuxième partie (19, 219) soit séparé de ladite première partie (18, 218).

2. Machine d'équilibrage selon la revendication 1, dans laquelle ledit module d'équilibrage (M), lorsqu'il est utilisé, est espacé latéralement de ladite colonne fonctionnelle (101).

3. Machine d'équilibrage selon la revendication 1, dans laquelle ladite première partie (218) de ladite structure de support (217) comprend :
- une base (224) pour une fixation à ladite colonne fonctionnelle (101), de préférence à l'aide de moyens réversibles (224A), de préférence des connexions filetées,
- une paire de premiers organes latéraux parallèles (225) aptes à contenir au moins une partie de ladite deuxième partie (219).

4. Machine d'équilibrage selon la revendication 1 ou 3, dans laquelle ladite deuxième partie (219) de ladite structure de support (217) comprend une paire de deuxièmes organes latéraux parallèles (229), un logement (219A) pour ledit module d'équilibrage étant formé entre lesdits deuxièmes organes latéraux.

5. Machine d'équilibrage selon l'une quelconque des revendications 1, 3 ou 4, dans laquelle lesdites moyens de verrouillage réversibles (237) de ladite deuxième partie (219) sur ladite première partie (218) comprennent :
- une fente (223) ménagée à l'extrémité d'au moins un dit premier organe latéral (225) de la première partie (218) de la structure de support, apte à loger un appendice respectif (234) faisant saillie latéralement depuis un deuxième organe latéral correspondant (229) de la deuxième partie (219) de la structure de support, un évidement inférieur étant présent sur ladite fente (233) pour loger ledit appendice (234) ; de préférence une première poignée (237A) étant présente, connectée à l'axe dudit appendice (234) et apte à se verrouiller par friction lorsqu'elle est tournée vers ledit premier organe latéral (225), dans lequel ladite fente (233) est présente ;
- une tige transversale (235) agencée entre lesdits premiers organes latéraux (225), apte à être introduite sous ce qui est la partie arrière de ladite deuxième partie (219) de la structure, apte à former une butée supérieure anti-renversement pour l'assemblage formé par la deuxième partie (219) de la structure de support dudit module (M) ;
- de préférence, un élément de rigidification (231) du couplage de la deuxième partie (219) dans la première partie (218) étant présent, apte à amener ladite partie arrière (219B) de la deuxième partie (219) à appuyer contre ladite tige ; de préférence ledit élément de rigidification (231) étant un élément fileté agencé passant à travers un passage taraudé en correspondance réalisé sur la plaque de base (228) de ladite deuxième partie (219), dont l'extrémité contacte la base de ladite première partie (218), de sorte qu'en serrant ledit élément fileté, ladite partie arrière est soulevée vers ladite tige.

6. Machine d'équilibrage selon l'une ou plusieurs des revendications précédentes, comprenant des moyens (21) pour fixer ledit module d'équilibrage (M) à ladite deuxième partie (19, 219) de la structure de support (17, 217), de sorte que ledit module (M) puisse être détaché de ladite deuxième partie (19, 219).

7. Machine d'équilibrage selon l'une ou plusieurs des revendications précédentes, dans laquelle ladite console électronique (22) est séparée dudit corps de base (11) dudit module d'équilibrage (M) et connectée fonctionnellement auxdits moyens électroniques (16) pour mesurer un déséquilibre dynamique présent dans ledit corps de base (11), au moyen de fils ou d'une connexion sans fil ; de préférence un dispositif (23) pour supporter ladite console (22) étant présent sur ladite structure de support (17) lorsqu'elle est agencée sur un site pour réaliser un équilibrage ; de préférence ladite console électronique (22) étant transportable séparément dudit module d'équilibrage (M).

8. Machine d'équilibrage selon l'une ou plusieurs des revendications précédentes, comprenant un dispositif (40) pour mesurer la position axiale de points prédéterminés sur la roue (R) à équilibrer pour fournir les valeurs mesurées dans ladite console électronique (22) afin de calculer des paramètres d'équilibrage.

9. Machine d'équilibrage selon la revendication 8, dans laquelle ledit dispositif de mesure (40) comprend un élément de mesure (41), de préférence s'étendant principalement longitudinalement, prévu dans une structure (42) pour faire coulisser celle-ci parallèlement à l'axe dudit arbre ; avec ledit élément de mesure (41) étant associés des moyens pour évaluer la distance axiale d'un point de mesure de celui-ci avec un point fixé par rapport à ladite structure coulissante (42) ; de préférence ledit élément de mesure (41) comprenant une partie en forme de tige (41A) coulissant dans ladite structure coulissante (42) ; de préférence ladite partie en forme de tige (41A) ayant une échelle de mesure de la distance.

10. Machine d'équilibrage selon la revendication 9, dans laquelle ledit élément de mesure (41) comprend également une partie d'extrémité (41B) faisant saillie en porte-à-faux depuis ladite partie en forme de tige (41A), tournant autour de l'axe de ladite partie en forme de tige (41A), apte à être placée en contact avec l'intérieur de la roue dans une zone de référence dont la distance doit être mesurée ; de préférence, ledit dispositif de mesure (40) comprend également une partie pour mesurer la distance radiale depuis l'axe dudit arbre desdits points prédéterminés sur la roue à équilibrer pour fournir les valeurs mesurées à ladite console électronique afin de calculer les paramètres d'équilibrage ; ladite mesure étant calculée sur la base de la position angulaire de ladite partie d'extrémité faisant saillie par rapport à l'axe de ladite partie en forme de tige ; de préférence ledit dispositif de mesure comprend des capteurs pour mesurer la position de ladite partie en forme de tige par rapport audit point fixé par rapport à ladite structure coulissante et pour mesurer la position angulaire de ladite partie d'extrémité faisant saillie par rapport à son axe de rotation, des moyens électroniques étant présents pour l'acquisition des valeurs de position mesurées par lesdits capteurs.

11. Machine d'équilibrage selon l'une ou plusieurs des revendications précédentes, comprenant un dispositif de freinage (50) de la roue de rotation (R) ; de préférence ledit dispositif de freinage (50) comprend un levier (51) articulé à ladite structure de support (17) et apte à être mis en contact avec une partie de celle-ci sur le pneu durant l'équilibrage.

12. Machine d'équilibrage selon l'une ou plusieurs des revendications précédentes, comprenant des moyens (55) pour faire tourner la roue, du type manuel ou motorisé ; de préférence lesdits moyens pour faire tourner la roue sont du type manuel et comprennent un guidon (56) apte à être fixé sur la partie opposée dudit module d'équilibrage (M) par rapport à la roue sur ledit arbre (12) ou sur lesdits moyens pour fixer ladite roue à l'arbre ou sur ladite roue.

13. Machine intégrée (1000) pour retirer des pneus et équilibrer des roues, en particulier mais non exclusivement pour des roues de camion, comprenant :
- un dispositif de retrait de roue (100) comprenant une colonne fonctionnelle (101), sur un premier côté fonctionnel de laquelle sont présents des bras fonctionnels (103) pour retirer des pneus,
- une machine d'équilibrage (10) selon l'une ou plusieurs des revendications précédentes, fixée sur ladite colonne fonctionnelle (101), apte à supporter ladite structure de support (17).

14. Machine intégrée (1000) selon la revendication 13, dans laquelle ladite structure de support de ladite machine d'équilibrage est fixée au sommet de ladite colonne fonctionnelle ; de préférence ladite deuxième partie de ladite structure étant agencée en porte-à-faux par rapport à un deuxième côté fonctionnel de ladite colonne fonctionnelle, à l'opposé dudit premier côté.

15. Machine intégrée (1000) selon la revendication 13 ou 14, agencée à l'intérieur d'un van, dans laquelle ladite colonne fonctionnelle (101) a un axe d'articulation (X) et ladite machine intégrée peut être basculée autour dudit axe d'articulation (X) et la partie relative à ladite machine d'équilibrage (10) est partiellement associée à ladite colonne (101) du dispositif de retrait de roue (100) et partiellement placée à l'intérieur du van, détachée dudit dispositif (100) ; ledit module d'équilibrage (M) étant détaché de l'ensemble 100-17.
